# EUROPÄISCHE PATENTANMELDUNG

(11) **EP 1 475 412 A1**
(43) Veröffentlichungstag der Anmeldung: **10.11.2004**
(21) Anmeldenummer: 03010131.5
(22) Anmeldetag: 05.05.2003
(51) Int. Cl.: C08L 63/00, C08G 59/50, C08G 59/62

(54) **Mannichbasenenthaltende Epoxidharzzusammensetzungen geeignet zur Anwendung bei Hohen Temperaturen**

(71) Anmelder: Sika Technology AG, 6340 Baar (CH)
(72) Erfinder: Wigger, Thomas, CH-8904 Aesch bei Birmensdorf (CH)
(74) Vertreter: Isler, Jörg

(57) **Zusammenfassung**

Die vorliegende Erfindung betrifft eine zweikomponentige Epoxidharz-Zusammensetzungen, welche in der Härter-Komponente mindestens eine Mannichbase enthalten, und nach Aushärtung bei einer Temperatur zwischen 5°C und 60°C eine Glasumwandlungstemperatur von mehr als 80°C aufweisen.

Diese zweikomponentige Epoxidharz-Zusammensetzungen finden insbesondere Anwendungen als Klebstoffe.

## Beschreibung

### Technisches Gebiet

Die Erfindung betrifft zweikomponentige Epoxidharzsysteme, welche durch Kalthärtung ausgehärtet werden und ohne nachfolgendes Tempern hohe Glasumwandlungstemperaturen aufweisen.

### Stand der Technik

Zweikomponentige Epoxidharzsysteme sind seit langem bekannt. Die erste Komponente umfasst mindestens ein Epoxidharz, während die zweite Komponente einen Härter umfasst. Beim Mischen der zwei Komponenten reagieren Epoxidharz und Härter miteinander, was eine Vernetzung bewirkt. Auf Aminen basierende Härter sind weit verbreitet. Die Eigenschaften eines ausgehärteten Epoxidharzes hängen jedoch sehr stark von der Auswahl der eingesetzten Amine, der Applikationstemperatur und der Aushärtungstemperatur ab.

Epoxidharzsysteme werden vielfach zur Erzielung von starren Verklebungen eingesetzt. Solche Verklebungen sind vielfach strukturelle Verklebungen. Der Einsatzbereich von Verbunden, welche solche Verklebungen aufweisen, ist sehr vielfältig und umfasst sehr unterschiedliche Temperaturbereiche. Besonders für den Einsatz bei hohen Temperaturen ist die Glasumwandlungstemperatur des Klebstoffes ein äussert wichtiger Faktor. Beim Überschreiten der Glasumwandlungstemperatur ändert der Klebstoff markant seine Eigenschaften, wodurch eine sichere und langfristige Verklebung nicht gewährleistet werden kann.

Es sind deshalb schon vermehrt Anstrengungen unternommen worden, Epoxidharzsysteme zu entwickeln, die eine hohe Glasumwandlungstemperatur aufweisen. Erfolgreich sind hohe Glasumwandlungstemperaturen durch hitzehärtende Epoxidharzsysteme realisiert worden. Bei hitzehärtenden Epoxidsysteme werden typischerweise Temperaturen von deutlich höher als 100°C eingesetzt. Beispielsweise kann Epoxidharz unter dem Einfluss von Dicyanamid (dicy) bei Temperaturen von üblicherweise über 120°C ausgehärtet werden. Die Aushärtung bei so hohen Temperaturen ist jedoch vielfach unmöglich oder nicht erwünscht.

Weiterhin ist es bekannt, dass die Glasumwandlungstemperatur bei vielen bei Raumtemperatur oder leicht erhöhten Temperaturen applizierten Epoxidharz-Klebstoffen durch ein anschliessendes Tempern erhöht werden kann. Hierbei wird beispielsweise ein Epoxidharz-Klebstoff bei Raumtemperatur appliziert und nach dem Erreichen einer gewissen Frühfestigkeit über Nacht oder während einigen Tagen in einem Heizraum bei Temperaturen von beispielsweise 100°C gelagert. Der Erhöhung der Glasumwandlungstemperatur des Klebstoffs durch Tempern sind jedoch materialbedingt Grenzen gesetzt. Weiterhin ist es praktisch unmöglich grosse Teile oder gar Bauwerke in einen Heizraum zu verschieben oder künstlich grossflächig zu erwärmen.

Speziell beim Verkleben von grossen Bauteilen oder bei Aussenanwendungen im Hoch- und Tiefbau werden deshalb vermehrt kalthärtende Klebstoffe gefordert, welche nach Mischung, Applikation und Aushärtung bei Raumtemperatur oder leicht erhöhten Temperaturen eine hohe Glasübergangstemperatur aufweisen. Auf eine zusätzliche Zuführung von künstlich erzeugter Hitze in Form einer Hitzehärtung oder als nachträgliches Tempern soll hierbei verzichtet werden.

### Darstellung der Erfindung

Aufgabe der vorliegenden Erfindung ist es, eine zweikomponentige Epoxidharz-Zusammensetzung zur Verfügung zu stellen, welche nach Aushärtung bei einer Temperatur zwischen 5°C und 60°C eine hohe Glasumwandlungstemperatur aufweist.

Überraschenderweise wurde gefunden, dass dies durch den Einsatz von mindestens einer Mannichbase in der Härter-Komponente erreicht werden kann.

Mit einer solchen zweikomponentigen Epoxidharz-Zusammensetzung können praxistaugliche Systeme formuliert werden, die einerseits bei Raumtemperatur aushärten und andererseits nach der Aushärtung Glasumwandlungstemperaturen von höher als 80 °C aufweisen, ohne dass ein nachträgliches Tempern nötig ist, was zur verlässlichen Verwendung dieser Epoxidharz-Zusammensetzungen auch bei höheren Temperaturen führt.

Die Glasumwandlungstemperatur kann auf mehrere verschiedene Arten gemessen werden. Je nach angewandter Methode können jedoch die ermittelten Werte variieren. Deshalb soll hier und im Folgenden unter ,Glasumwandlungstemperatur', auch als ,Tg' bezeichnet, die mittels DSC aus der halben Höhe nach pr EN 12614 ermittelten Werte bezeichnen.

Somit ist es ermöglicht, Epoxidharz-Zusammensetzungen auch für solche Anwendungen zu verwenden, wo eine übliche Hitzehärtung oder Tempern nicht möglich oder nicht gewünscht ist.

### Weg zur Ausführung der Erfindung

Die vorliegende Erfindung betrifft eine zweikomponentige Epoxidharz-Zusammensetzungen, welche in der Härter-Komponente mindestens eine Mannichbase enthalten, und nach Aushärtung bei einer Temperatur zwischen 5°C und 60°C eine Glasumwandlungstemperatur von mehr als 80°C aufweisen.

Geeignete Mannichbasen lassen sich aus phenolischen Verbindungen, Formaldehyd, und Polyaminen herstellen.

Als phenolische Verbindungen sind insbesondere solche geeignet, welche an o- und / oder p-Stellung zur Phenolgruppe unsubstituierte Positionen aufweisen. Bespiele hierfür sind Hydroxynaphtaline, Polyhydroxynaphtaline, Alkylphenole, Dialklyphenole, verbrückte Phenole, wie beispielsweise Tetrahydronaphtole. Auch polyphenolische Verbindungen, sowohl einkernige als auch mehrkernige, sind mitumfasst. Beispiele für solche polyphenolische Verbindungen sind Brenzkatechin, Resorcin, Pyrogallol, Phloroglucin, Bisphenol-A, Bisphenol-F.

Insbesondere als geeignete Mannichbasen haben sich gezeigt, zu deren Herstellung eine phenolische Verbindung der Formel (I) oder (II) 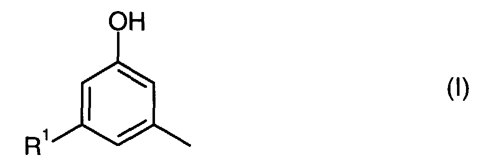 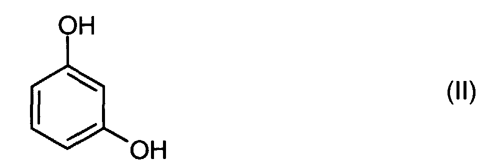 sowie Formaldehyd und mindestens ein Polyamin verwendet werden, wobei R¹ hierbei H oder CH₃ darstellen.

Als besonders bevorzugt gilt m-Kresol, wo in Formel (I) R¹ ein Wasserstoffatom darstellt.

Formaldehyd kann in dem Fachmann üblicherweise bekannten Formen direkt oder aus formaldhydabspaltenden Verbindungen zur Anwendung kommen. Bevorzugt ist Formaldehyd in Form als paraFormaldehyd oder als Formalin-Lösung. Besonders bevorzugt ist Formalin-Lösung.

Unter ,Polyamin' wird eine Verbindung verstanden, welche zwei oder mehrere primäre Aminogruppen aufweist. Solche Polyamine sind dem Fachmann auf dem Gebiet der Epoxid- und Polyurethan-Chemie als Vernetzungsmittel bekannt. Besonders geeignet sind:
- Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,5-Diamino-2-methylpentan (MPMD), 1,6-Hexandiamin, 2,2,4- und 2,4,4-Trimethylhexamethylendiamin, 1,7-Heptandiamin, 1,8-Octandiamin, 4-Aminomethyl-1 ,8-octandiamin, Methyl-bis-(3-aminopropyl)amin, 1,3-Diaminopentan (DAMP), 2,5-Dimethyl-1,6-hexamethylendiamin, Diethylentriamin, Triethylentetramin (3,6-Diaza-octamethylendiamin), Tetraethylenpentamin, Pentamethylenhexamin, Dipropylentriamin, Tripropylentetramin, Tetrapropylenpentamin, 4,7-Diaza-decamethylen-1,10-diamin sowie Mischungen der vorgenannten Polyamine.
- cycloaliphatische Polyamine wie 1,3- und 1,4-Diaminocyclohexan, 1,2-Diaminocyclohexan (DCH), Bis-(4-aminocyclohexyl)-methan (PACM), Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan, 1,3- und 1,4-Bis-(aminomethyl)cyclohexan, 1,3-2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.02,6]decan, 3,9-Bis-(3-aminopropyl)-2,4,8,10-tetraoxaspiro[5.5]undecan, 1,3- und 1,4-Xylylendiamin, Octahydro-4,7-methano-indene-2,5-diamin, Octahydro-4,7-methano-indene-1,6-diamin, Ethergruppen-haltige aliphatische Polyamine wie Bis-(2-aminoethyl)ether, und höhere Oligomere davon, sowie Mischungen der vorgenannten Polyamine.
- aromatische Amine wie Toluylendiamin, Phenylendiamin, 4,4 - methylendianilin (MDA) sowie Mischungen der vorgenannten Polyamine.

Bevorzugt sind Polyamine ausgewählt aus der Gruppe umfassend DAMP, IPDA, 1,3- und 1,4-Diaminocyclohexan, 1,2-Diaminocyclohexan 1,3-und 1,4-Butandiamin, 1,3- und 1,5-Pentandiamin, MPMD, 1,3-Xylylendiamin, 1,3-Bis-(aminomethyl)cyclohexan, Diethylentriamin, Triethylentetramin (3,6-Diaza-octamethylendiamin), Tetraethylenpentamin, Pentamethylenhexamin, Dipropylentriamin, Tripropylentetramin, Tetrapropylenpentamin, 4,7-Diazadecamethylen-1,10-diamin, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan sowie Mischungen davon.

Besonders bevorzugt sind die Polyamine ausgewählt aus der Gruppe umfassend 1,3-Xylylendiamin, 1,3-Bis-(aminomethyl)cyclohexan, Diethylentriamin, Triethylentetramin (3,6-Diaza-octamethylendiamin), Tetraethylenpentamin, IPDA, 1,2-Diaminocyclohexan, 4,7-Diaza-decamethylen-1,10-diamin sowie Mischungen davon.

Selbstverständlich sind auch Mischungen solcher Polyamine mit anderen Polyaminen oder anderen Aminen möglich.

Mannichbasen lassen sich aus phenolischen Verbindungen, Formaldehyd, und Polyaminen herstellen. Die Herstellung von Mannichbasen ist nach üblichen Verfahren möglich.

Es hat sich gezeigt, dass ein zweistufiges Herstellverfahren von Vorteil ist. Hierbei werden in einer ersten Stufe die phenolische Verbindung, insbesondere eine phenolische Verbindung der Formel (I) oder (II), mit Formaldehyd unter Einfluss einer Base zur Reaktion gebracht. Diese Base kann ein tertiäres Amin, Alkalihydroxid, Erdalkalihydroxid oder Mischungen davon sein. Besonders geeignet sind tertiäre Amine, insbesondere tertiäre Amine, die zusätzlich noch primäre Aminogruppen aufweisen, wie beispielsweise 1-(2-Aminoethyl)-piperazin. Bevorzugt sind tertiäre Amine der Formel (III), in welchen die Reste R² ein C₁-C₆-Alkyl darstellen und n = 1, 2, oder 3 bedeuten.

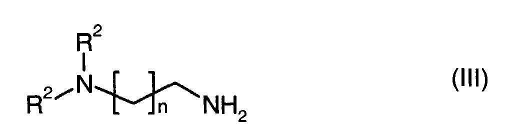

Als R² bevorzugt ist R² = Methyl oder Ethyl, insbesondere R² = Methyl. Als n bevorzugt ist n = 2.

Vorteilhaft wird in der ersten Stufe der Formaldehyd zu einer Mischung der phenolischen Komponente und der Base, insbesondere zu einer Mischung der phenolischen Verbindung der Formel (I) oder (II) und einem tertiären Amins, zugegeben. Die Zugabe ist vorteilhaft derart gestaltet, dass unter Kühlung der ebenfalls gekühlte Formaldehyd langsam zu gegeben wird, so dass nur ein geringfügiger Temperaturanstieg festgestellt wird.

In einer zweiten Stufe wird eine Umsetzung mit mindestens einem Polyamin durchgeführt. Vorteilhaft wird in der zweiten Stufe langsam das aus der ersten Stufe resultierende Produkt zum Polyamin zugegeben.

Dem Fachmann ist klar, dass bei dieser Art von Umsetzung in geringem Masse auch noch nicht reagierte Bestandteile im Endprodukt vorhanden sein können.

Unter gewissen Bedingungen führen jedoch auch einstufige Verfahren, in welchen phenolische Komponente, Formaldehyd und Polyamin zur Reaktion gebracht werden zu Mannichbasen, die in erfindungsgemässen Epoxidharz-Zusammensetzungen verwendet werden können.

Die Mannichbase weist nebst sekundären Aminogruppen auch primäre Aminogruppen auf.

Die Mannichbase weist vorteilhaft keinen oder zumindest einen kleinen Anteil an mehrkernigen Oligomeren auf. Bevorzugt ist der Oligomerenanteil kleiner als 20 Gewichts-%, insbesondere kleiner als 10 Gewichts-% bezogen auf das Gewicht der Mannichbase.

Weiterhin vorteilhaft ist, wenn die Mannichbase weniger als 1 Gewichts-%, insbesondere weniger als 0.5 Gewichts-%, bevorzugt weniger als 0.1 Gewichts-%, an nicht reagierter phenolischer Verbindung bezogen auf das Gewicht der Mannichbase aufweist.

Die Mannichbase weist vorteilhaft eine niedrige Viskosität auf. Für die Formulierung von Klebstoffen sind insbesondere geeignet Viskositäten 200 bis 1000 mPas, insbesondere zwischen 200 und 700 mPas.

Die beschriebene Mannichbase ist ein Bestandteil der Härterkomponente einer zweikomponentigen Epoxidharz-Zusammensetzung. Sie kann alleine oder in Verbindung mit anderen in Härter-Komponenten für zweikomponentigen Epoxidharz-Zusammensetzungen üblichen Bestandteilen vermischt vorkommen. Insbesondere geeignet sind hierfür andere Amine, insbesondere Polyamine, adduktierte Amin-Härter, Beschleuniger, Zusatzstoffe wie Additive, Pigmente und Füllstoffe. Als Beschleuniger bevorzugt sind Tris-(2,4,6-dimethylaminomethyl)-phenol und Aminoethylpiperazin. Auch Extender oder Verdünner sind möglich, allerdings ist in diesen Fällen stark darauf zu achten, dass die dadurch verursachte Erniedrigung der Glasumwandlungstemperatur nicht so gross ausfällt, dass die Glasumwandlungstemperatur der ausgehärteten Epoxidharz-Zusammensetzung tiefer als die geplante Gebrauchstemperatur des Epoxidsystems zu liegen kommt.

Die Herstellung einer solchen Härterkomponente kann auf üblichen Rührwerken erfolgen.

Die erfindungsgemässe zweikomponentigen Epoxidharz-Zusammensetzung weist eine Harzkomponente auf. Diese Harzkomponente umfasst Epoxidharze. Epoxidharze sind die dem Epoxidharz-Fachmann bekannten Epoxidharze, besonders die Epoxidharze auf Basis von Diglycidylether von Bisphenol-A, Bisphenol-F und Bisphenol-A/F-Mischungen. Neben den Flüssigharzen sind besonders die Festharze von grosser Wichtigkeit. Von besonderem Interesse sind Novolak-Harze. Des weiteren sind Reaktiwerdünner übliche Bestandteile der Harzkomponente. Bevorzugt sind Reaktiwerdünnner mit zwei oder mehreren, insbesondere zwei oder drei, Glycidylgruppen. Des weiteren geeignete Reaktivverdünner sind N-Glycidylether, welche als Reaktionsprodukt aus Epichlorhydrin und Aminen hergestellt werden können. Für diese Umsetzung geeignete Amine sind Anilin, m-Xylylendiamin (MXDA), 4,4 -Methylendianilin (MDA), oder Bis(4-methylaminophenyl)methan. Insbesondere als N-Glycidylether geeignet sind p-Hydroxyaminobenzol-Triglycidyladdukt, MXDA-Tetraglycidyladdukt, MDA-Tetraglycidyladdukt.

Weitere Bestandteile können Extender, Verdünner, Beschleuniger, Zusatzstoffe wie Additive, Pigmente und Füllstoffe darstellen. Bei der Verwendung von Reaktivverdünnern, Extendern und Verdünnern ist stark darauf zu achten, dass die dadurch verursachte Erniedrigung der Glasumwandlungstemperatur nicht so gross ausfällt, dass die Glasumwandlungstemperatur der ausgehärteten Epoxidharz-Zusammensetzung tiefer als die geplante Gebrauchstemperatur des Epoxidsystems zu liegen kommt.

Die Herstellung einer solchen Epoxidharz-Komponente kann auf üblichen Rührwerken erfolgen.

Das Mischungsverhältnis von Epoxidharz-Komponente und Härter-Komponente ist vorteilhaft derart zu wählen, dass in der dem Fachmann bekannten Art und Weise Epoxid- und Amin-Gruppen stöchiometrisch miteinander reagieren. Es kann aber auch von diesem Verhältnis abgewichen werden und unter Umständen bis etwa 20% unter- oder überhärtet werden.

Die Mischung der zwei Komponenten kann manuell oder maschinell erfolgen. Ungefüllte Systeme oder leicht pastöse Systeme können einfach mit Rührer oder Mischgeräten wie 2C-Kartuschenpistolen oder mit Pumpen in Kombination mit Statikmischern oder dynamischen Mischern gemischt werden. Hochgefüllte Systeme werden vorteilhaft mittels Rührer von Hand oder Rührwerk gemischt.

Die erfindungsgemässe zweikomponentige Epoxidharz-Zusammensetzung lässt sich vielseitig einsetzen. So ist ein Einsatz als Beschichtung, Lack, Belag oder Dicht- oder Klebstoff möglich. Insbesondere die Verwendung als Klebstoff ist von besonderem Interesse. Als besonders bevorzugt gilt die Verwendung als Klebstoff für die Anwendung im Hoch- oder Tiefbau. Besonders wichtig ist die Verwendung als Klebstoff zur statischer Verstärkung eingesetzt. Als wichtige Anwendung ist der Einsatz als struktureller Klebstoff.

Für die Verwendung als Klebstoff wird die zweikomponentige Epoxidharz-Zusammensetzung gemischt und zumindest auf eine Feststoffoberfläche appliziert und anschliessend mit einer weiteren Feststoffoberfläche kontaktiert. Es ist auch möglich, dass der Klebstoff in einen Spalt eingepresst wird und dort aushärtet. Nach dem Aushärten der Epoxidharz-Zusammensetzung kann ein so hergestellte Verklebung belastet werden. Bis zum Erreichen der maximalen Festigkeit können durchaus einige Wochen verstreichen.

Es wurde weiterhin gefunden, dass diese Systeme längere Topfzeiten aufweisen als bekannte Mannichbasen, welche aus Phenol, p-tert.-Butylphenol, Nonylphenol und/oder Bisphenol-A sowie Polyaminen mittels konventioneller Technik hergestellt werden.

Die zweikomponentige Epoxidharz-Zusammensetzung wird gemischt und appliziert. Sie kann kaltgehärtet werden, d.h. bei Temperaturen zwischen 5°C und 60 °C ausgehärtet werden. Vorteilhaft werden die Komponenten ebenfalls bei Temperaturen zwischen 5 und 60 °C gemischt und appliziert.

Diese Temperaturen beschreiben die Umgebungstemperaturen, bei denen ein Klebstoff üblicherweise, vor allem im Hoch- und Tiefbau, appliziert und ausgehärtet wird. Besonders wichtig ist der Bereich zwischen 10°C und 50°C, insbesondere der Bereich zwischen 10°C und 30°C. Die Applikation bei Temperaturen im Bereich der Raumtemperatur ist besonders häufig. Für die Eigenschaften des ausgehärteten Epoxidharz-Zusammensetzung ist vor allem die Aushärtetemperatur relevant. Deshalb ist eine Aushärtung bei einer Temperatur zwischen 10°C und 50°C, insbesondere zwischen 10°C und 30°C, bevorzugt.

Der Verzicht von künstlich zugeführter Wärme reduziert Applikationssowie Fertigungskosten. Grossflächige Objekte können zudem mit üblichen Mitteln nur schwer bis gar nicht künstlich erwärmt werden. Das Wegfallen der Notwendigkeit einer solchen künstlich erzeugten grossflächigen Erwärmung lässt erst Anwendungen auf grossen Objekten zu, wie sie im Hoch- oder Tiefbau üblich sind.

Bei Temperaturen von tiefer als 5 °C ist eine genügend gute Aushärtung nicht gewährleistet. Beim Einsatz von Temperaturen von höher als 60°C wird der Einsatz von künstlicher Wärmequellen benötigt. Dem Fachmann ist klar, dass das Mischen, die Applikation sowie das Aushärten auch bei höheren Temperaturen möglich sind. Die allenfalls dafür notwendigen Anpassungen von Topfzeit und Viskositäten können durch dem Fachmann bekannten Techniken erreicht werden. Ebenso kann ein nachfolgendes Tempern durchgeführt werden. Auch in diesen Fällen sind Glasumwandlungstemperaturen von höher als 80°C realisierbar. Dem Fachmann ist ebenfalls klar, dass die ausgehärtete zweikomponentige Epoxidharz-Zusammensetzung nicht zwingendermassen bei höheren Gebrauchstemperaturen eingesetzt werden muss. Eine solche kaltgehärtete zweikomponentige Epoxidharz-Zusammensetzung kann durchaus bei Raumtemperatur eingesetzt werden.

Typischerweise werden die erfindungsgemässen zweikomponentige Epoxidharz-Zusammensetzungen bei Raumtemperatur oder bei leicht erhöhter Temperatur gemischt, appliziert und anschliessend bei dieser Umgebungstemperatur ausgehärtet. Nach Aushärtung kann beim Gebrauch des gehärteten Epoxidharzes die Temperatur bis nahe an die Glasumwandlungstemperatur gelangen, ohne dass die mechanischen Eigenschaften zu stark negativ beeinflusst werden. Insbesondere bei der Verwendung des Epoxidharz-Zusammensetzung als Klebstoff darf bei der Gebrauchstemperatur die Kraftübertragung zwischen den Klebepartnern nicht markant beeinträchtigt werden oder eine Versagen der Haftung oder ein Kriechen des Klebstoffs auftreten.

Die erfindungsgemässen zweikomponentigen Epoxidharz-Zusammensetzungen weisen nach der Aushärtung eine Glasumwandlungstemperatur von über 80°C, vorzugsweise über 100°C, insbesondere im Bereich zwischen 100°C und 150°C, auf.

Beispielsweise kann eine erfindungsgemässe zweikomponentige Epoxidharz-Zusammensetzung als Klebstoff für das Verkleben von faserverstärkten Composites eingesetzt werden. Ein illustrierendes Beispiel hierfür ist das Verkleben von Kohlenfaser-Lamellen beim Verstärken von Bauwerken, wie Brücken.

Weiterhin können erfindungsgemässe zweikomponentige Epoxidharz-Zusammensetzungen als Kunststoffmatrix für die Herstellung von faserverstärkten Composites eingesetzt werden. So lassen sich beispielsweise Kohlen- oder Glasfasern in eine zweikomponentige Epoxidharz-Zusammensetzung einbetten und können im ausgehärteten Zustand als Faser-Composite, beispielsweise in Form einer Lamelle, zum Einsatz kommen.

Ebenso können beispielsweise Fasergewebe oder -gelege mittels einer zweikomponentigen Epoxidharz-Zusammensetzung auf ein Bauwerk appliziert werden, und dort mit dem Bauwerk zusammen ein faserverstärktes Composite bilden.

### Beispiele

Die im Folgenden genanten Beispiele dienen zur Veranschaulichung der Erfindung

### Beispiel einer zweistufigen Mannichbasenherstellung

### Herstellung 1. Stufe

86.4g m-Kresol wurde in einem Glaskolben vorgelegt und mit 81.3 g 1,3-N,N-Dimethylaminopropylamin versetzt. Das Gemisch wurde auf 20°C gekühlt und dann wurde langsam und unter Kühlung 197 g kalte Formalinlösung (36.5 % in Wasser) zugetropft. Es trat eine deutliche Wärmetönung auf. Die Innentemperatur wurde zwischen 40°C und 45°C gehalten. Nach der Beendigung der Zugabe wurde noch während 1 Stunden bei 40 - 45°C gerührt.

### Herstellung 2. Stufe

Das in Tabelle 1 angegebene Polyamin wurde im Reaktor bei RT unter Stickstoff vorgelegt, auf 80°C erwärmt und das aus der ersten Stufe resultierende Zwischenprodukt unter Rühren langsam zugegossen. Es trat eine milde Wärmetönung auf. Unter Stickstoff wurde aufgeheizt auf ca. 110°C und gleichzeitig das Reaktionswasser unter Normaldruck abdestilliert. Nach 80% der theoretischen Menge Reaktionswasser wurde Vakuum angelegt und bis zur theoretischen Wassermenge abdestilliert.

### Beispiel einer einstufigen Mannichbasenherstellung

342 g 1,2 Diaminocyclohexan (DCH), 129 g Aminoethylpiperazin, sowie 122 g 3,5-Xylenol wurden vorgelegt. Unter Kühlung wurde bei einer Temperatur von 20 bis 30°C 197 g kalte Formalinlösung (36.5 % in Wasser) zugetropft. Es trat eine erhebliche Wärmetönung auf. Unter Stickstoff wurde aufgeheizt auf ca. 110°C und gleichzeitig das Reaktionswasser unter Normaldruck abdestilliert. Nach 80% der theoretischen Menge Reaktionswasser wurde Vakuum angelegt und bis zur theoretischen Wassermenge abdestilliert.

**Tabelle 1**

| Mannichbasen und Referenzen. | | | |
|---|---|---|---|
| Bezeichnung | Polyamin | Eingesetzte Menge Polyamin in 2 stufiger Herstellung (g) | Viskosität (mPas) |
| ***MB1*** | DETA | 330 | 288 |
| ***MB2*** | Laromin C260 | 638 | 14180 |
| ***MB3*** | DCH | 306 | 466 |
| ***MB4*** | IPD | 457 | 3272 |
| ***MB5*** | MXDA | 365 | 772 |
| ***Ref. 1*** | Laromin C260 | - | 151 |
| ***Ref. 2*** | IPD | - | 19 |

Tabelle 1 zeigt die Eigenschaften der auf Raumtemperatur abgekühlten Mannichbasen. Die angegebenen Viskositäten beziehen sich auf eine Abmischung mit 5 Gew.-% Beschleuniger Tris-(2,4,6-dimethylaminomethyl)-phenol (Araldite HY-960, Vantico). Die Viskosität wurde als Rotationsviskometrie mittels Rheomat (Kegel/Platte) nach DIN EN ISO 3219 bestimmt. ***Ref.1*** und ***Ref. 2*.,** als Vergleich, sind keine Mannichbasen, sondern Amine.

Tabelle 2 zeigt die Eigenschaften von zweikomponentigen Epoxidharz-Zusammensetzungen. Die Epoxidharz-Komponente stellte hierbei jeweils eine Mischung bestehend aus 85% Bisphenol-A-Diglydiylether (kommerziell erhältlich von Vantico als Araldite GY-250) und 15% Trimethylolpropan-Trigylcidylether dar. Zusammensetzungen wurden bei 20 bis 23°C und 50% relativer Luftfeuchtigkeit wurden mit einem Härter bestehend aus der 95 Gew.-% Mannichbase oder Polyamin und 5 Gew. % Tris-(2,4,6-dimethylaminomethyl)-phenol (Araldite HY-960, Vantico) stöchiometrisch in Bezug Amin-H-/Epoxygruppen gemischt und während 7 Tagen bei diesen Bedingungen ausgehärtet.

**Tabelle 2**

| Eigenschaften der Zusammensetzungen. | | |
|---|---|---|
| Bezeichnung | Topfzeit | Tg(°C) |
| ***MB1*** | 20min | 103 |
| ***MB2*** | 1 h 54min | 105 |
| ***MB3*** | 47min | 128 |
| ***MB4*** | 48min | 122 |
| ***MB5*** | 27min | 109 |
| ***Ref. 1*** | 4h 49min | 59 |
| ***Ref. 2*** | 1 h 37min | 73 |

Die Topfzeit wurde von einer 100g- Mischung in einem isolierten zylindrischen Becher bei 23°C mittels Geltimer bestimmt.

Die Glasumwandlungstemperatur (Tg) wurde gemäss EN 12614 mittels DSC ermittelt. Hierzu wurde die ausgehärtete Probe zuerst auf +5°C gekühlt und anschliessend mit einer Heizrate von 10K / Minute auf 160°C (Relaxation des Polymergefüges) in einem ersten Durchlauf erhitzt. Danach wurde die Probe mit 50K / Minute auf +5°C gekühlt und bei 5°C während für 10 Minuten gehalten und in einem zweiten Durchlauf mit einer Heizrate von 10K / Minute auf 160°C erhitzt. Aus dem Messdiagramm des zweiten Durchlaufs wurde die Glasumwandlungstemperatur (Tg) aus der halben Höhe ermittelt.

Tabellen 1 und 2 zeigen, dass die Mannichbasen hergestellt werden können, die einerseits eine niedrige Viskosität aufweisen und andererseits dass mit solchen Mannichbasen enthaltenden Zusammensetzungen, im Gegensatz zu bekannten kalthärtenden Polyaminen (***Ref. 1*** und ***Ref. 2***), höhere Glasumwandlungstemperaturen erreicht werden können.

Tabelle 3 zeigt Härter, welche eine Abmischung von Mannichbasen mit Polyaminen darstellen.

**Tabelle 3**

| Eigenschaften von Mannichbasen/Polyamin-Abmischungen. | | | |
|---|---|---|---|
| Bezeichnung | Mannichbasen-Polyamin-Mischung | Verhältnis Mannichbase/Polyamin w:w | Viskosität (mPas)* |
| ***MB6*** | ***MB1*/**DETA | 1:1 | 51 |
| ***MB7*** | ***MB3***/DETA | 1:1 | 29 |
| ***MB8*** | ***MB1***/DCH | 1:1 | 30 |

| | | | |
|---|---|---|---|
| * Bestimmt als Abmischung mit 5 Gew.-% Beschleuniger Tns-(2,4,6-dimethylaminomethyl)-phenol (Araldite HY-960, Vantico) | | | |

Tabelle 4 zeigt die Eigenschaften von zweikomponentigen Epoxidharz-Zusammensetzungen enthaltend Mannichbasen/Polyamin-Härter aus Tabelle 3 Die zur Ermittlung dieser Werte verwendeten Methode wurden bereits beschrieben.

**Tabelle 4**

| Eigenschaften von Mannichbasen/Polyamin-Abmischungen enthaltenden Zusammensetzungen. | | |
|---|---|---|
| Bezeichnung | Topfzeit | Tg (°C) |
| ***MB6*** | 32 min | 98 |
| ***MB7*** | 27 min | 110 |
| ***MB8*** | 55 min | 108 |
| ***Ref.1*** | 4h 49min | 59 |
| ***Ref.2*** | 1 h 37min | 73 |

Tabellen 4 und 5 zeigen, dass auch Abmischungen von Mannichbasen mit Polyaminen mit den gewünschten Eigenschaften führen. Es ist jedoch ersichtlich, dass die Abmischung von Polyminen zu einer Absenkung der Glasumwandlungstemperatur führt. Deshalb sind Menge und Art des zugebenen Polyamins zu beachten.

Tabelle 5 zeigt die Eigenschaften der Mannichbasen, welche gemäss einem ein- oder zweistufigem Verfahren hergestellt wurden, beziehungsweise die Eigenschaften einer diesen enthaltenden zweikomponentigen Epoxidharz-Zusammensetzung. Die zur Ermittlung dieser Werte verwendeten Methode wurden bereits beschrieben

**Tabelle 5**

| Vergleich von ein- und zweistufigem Herstellverfahren. | | | | | |
|---|---|---|---|---|---|
| Bezeichnung | Stufen | Polyamin | Phenolische Verbindung | Viskosität* (mPas) | Tg |
| ***MB3*** | 2 | DCH | m-Kresol | 466 | 128 |
| ***MB9*** | 2 | DCH | 3,5-Xylenol | 497 | 125 |
| ***MB10*** | 1 | DCH | 3,5-Xylenol | 2036 | 93 |

| | | | | | |
|---|---|---|---|---|---|
| * Bestimmt als Abmischung mit 5 Gew.-% Beschleuniger Tns-(2,4,6-dimethylaminomethyl)-phenol (Araldite HY-960, Vantico) | | | | | |

Aus Tabelle 5 ist ersichtlich, dass sowohl ein- als auch zweistufige Verfahren zu geeigneten Mannichbasen beziehungsweise zu geeigneten Zusammensetzungen führen, dass aber das zweistufige Verfahren vorteilhaft, sowohl in der Viskosität als auch der Glasumwandlungstemperatur ist.

### Beispiele: Verwendung als Klebstoff

Es wurden die folgenden, in Tabelle 6 angebenden, Härterkomponenten hergestellt. Diese wurden zusammen mit der bereits beschriebenen Epoxidharz-Komponente ausgehärtet. Im Falle der gefüllten Komponente wurde zur Aushärtung in ***Bsp.*** ***4*** ebenfalls eine gefüllte Harzkomponente verwendet, die aus 25 Gew.-% Harz, 60 Gew.- % Quarzsand sowie 15 Gew.-% Quarzmehl bestand.

Die Zugfestigkeit wurde an Prüfkörpern, welche bei 23°C und 50 % relativer Luftfeuchtigkeit während 7 Tagen ausgehärtet wurden, nach ISO 527 mit einer Zuggeschwindigkeit von 5 mm/min bestimmt.

Die Stahlhaftung wurde auf verklebten Stahlprüfkörpern, welche bei 23°C und 50 % relativer Luftfeuchtigkeit während 7 Tagen ausgehärtet wurden, nach ISO 4624 mit 100 N/s bestimmt.

**Tabelle 6**

| Zusammensetzungen als Klebstoff. | | | | |
|---|---|---|---|---|
| | ***Bsp.1*** | ***Bsp.2*** | ***Bsp.3*** | ***Bsp.4*** |
| Härterkomponente | | | | |
| ***MB1*** (Gew.-%) | 95 | - | - | - |
| ***MB6*** (Gew.-%) | - | - | - | 21 |
| ***MB7*** (Gew.-%) | - | 95 | - | - |
| ***MB8*** (Gew.-%) | - | - | 95 | - |
| Tris-(2,4,6-dimethylaminomethyl)-phenol (Gew.-%) | 5 | 5 | 5 | - |
| Quarzsand (Gew.-%) | - | - | - | 32 |
| Quarzmehl (Gew.-%) | - | - | - | 47 |
| | | | | |
| Zugfestigkeit (MPa) | 31 | 41 | 10 | 25 |
| Stahlhaftung (MPa) | | | | 39 |
| Tg (°C) | 101 | 110 | 108 | 100 |

## Patentansprüche

1. Zweikomponentige Epoxidharz-Zusammensetzung, **dadurch gekennzeichnet, dass** sie in der Härter-Komponente mindestens eine Mannichbase enthält und nach Aushärtung bei einer Temperatur zwischen 5°C und 60°C eine Glasumwandlungstemperatur von mehr als 80°C aufweist.

2. Zweikomponentige Epoxidharz-Zusammensetzung gemäss Anspruch 1, **dadurch gekennzeichnet, dass** für die Herstellung der Mannichbase eine phenolische Verbindung der Formel (I) oder (II) 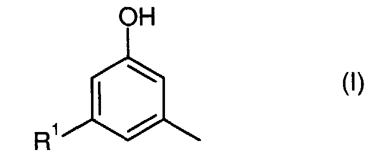 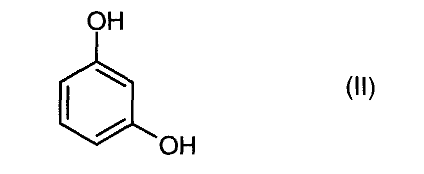 mit R¹ = H oder CH₃,
sowie Formaldehyd und mindestens ein Polyamin verwendet werden.

3. Zweikomponentige Epoxidharz-Zusammensetzung gemäss Anspruch 1 oder Anspruch 2, **dadurch gekennzeichnet, dass** für die Herstellung der Mannichbase eine phenolische Verbindung der Formel (I) mit R¹ = H verwendet wird.

4. Zweikomponentige Epoxidharz-Zusammensetzung gemäss einem der vorhergehenden Ansprüche, **dadurch gekennzeichnet, dass** für die Herstellung der Mannichbase in einer ersten Stufe mindestens eine phenolische Verbindung der Formel (I) oder (II) mit Formaldehyd in Gegenwart eines tertiären Amins zur Reaktion gebracht wird und in einer darauf folgenden Stufe mit mindestens einem Polyamin umgesetzt wird.

5. Zweikomponentige Epoxidharz-Zusammensetzung gemäss Anspruch 4, **dadurch gekennzeichnet, dass** das tertiäre Amin die Formel (III) aufweist 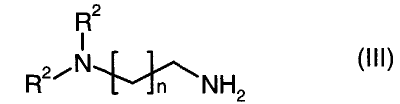 mit R² = C₁-C₆-Alkyl und n = 1, 2, oder 3.

6. Zweikomponentige Epoxidharz-Zusammensetzung gemäss einem der vorhergehenden Ansprüche, **dadurch gekennzeichnet, dass** die Mannichbase nebst sekundären auch primäre Aminogruppen aufweist.

7. Zweikomponentige Epoxidharz-Zusammensetzung gemäss einem der vorhergehenden Ansprüche, **dadurch gekennzeichnet, dass** das Polyamin ausgewählt ist aus der Gruppe umfassend DAMP, IPDA, 1,3-und 1,4-Diaminocyclohexan, 1,2-Diaminocyclohexan 1,3- und 1,4-Butandiamin, 1,3- und 1,5-Pentandiamin, MPMD, 1,3-Xylylendiamin, 1,3-Bis-(aminomethyl)cyclohexan, Diethylentriamin, Triethylentetramin (3,6-Diaza-octamethylendiamin), Tetraethylenpentamin, Pentamethylenhexamin, Dipropylentriamin, Tripropylentetramin, Tetrapropylenpentamin, 4,7-Diaza-decamethylen-1,10-diamin, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan sowie Mischungen davon.

8. Zweikomponentige Epoxidharz-Zusammensetzung gemäss einem der vorhergehenden Ansprüche, **dadurch gekennzeichnet, dass** das Polyamin ausgewählt ist aus der Gruppe umfassend 1,3-Xylylendiamin, 1,3-Bis-(aminomethyl)cyclohexan, Diethylentriamin, Triethylentetramin (3,6-Diaza-octamethylendiamin), Tetraethylenpentamin, IPDA, 1,2-Diaminocyclohexan, 4,7-Diaza-decamethylen-1,10-diamin sowie Mischungen davon.

9. Zweikomponentige Epoxidharz-Zusammensetzung gemäss einem der vorhergehenden Ansprüche, **dadurch gekennzeichnet, dass** die Aushärtung bei einer Temperatur zwischen 10°C und 50°C, insbesondere zwischen 10°C und 30°C erfolgt.

10. Zweikomponentige Epoxidharz-Zusammensetzung gemäss einem der vorhergehenden Ansprüche, **dadurch gekennzeichnet, dass** nach Aushärtung die Glasumwandlungstemperatur über 100°C liegt, insbesondere zwischen 100°C und 150 °C liegt.

11. Verwendung einer zweikomponentigen Epoxidharz-Zusammensetzung gemäss einem der Ansprüche 1 bis 10 als Klebstoff.

12. Verwendung einer zweikomponentigen Epoxidharz-Zusammensetzung gemäss Anspruch 11, **dadurch gekennzeichnet, dass** der Klebstoff zur strukturellen Verstärkung eingesetzt wird.

13. Verwendung einer zweikomponentigen Epoxidharz-Zusammensetzung gemäss Anspruch 12, **dadurch gekennzeichnet, dass** der Klebstoff für das Verkleben von faserverstärkten Composites mit Bauwerken verwendet wird.

14. Verwendung einer zweikomponentigen Epoxidharz-Zusammensetzung gemäss einem der Ansprüche 1 bis 10 als Kunststoff-Matrix für die Herstellung von faserverstärkten Composites.

15. Faserverstärkte Composites, **dadurch gekennzeichnet, dass** zu ihrer Herstellung eine zweikomponentige Epoxidharz-Zusammensetzung gemäss einem der Ansprüche 1 bis 10 verwendet wird.

16. Verfahren zum Verkleben, **dadurch gekennzeichnet, dass** eine zweikomponentige Epoxidharz-Zusammensetzung gemäss einem der Ansprüche 1 bis 10 auf mindestens eine Festskörperoberfläche angebracht wird und anschliessend mit mindestens einer weiteren Festkörperoberfläche kontaktiert wird.

17. Ausgehärtete Produkte, welche aus einer zweikomponentigen Epoxidharz-Zusammensetzung gemäss einem der Ansprüche 1 bis 10 erhalten wurden.
